(19) Europäisches Patentamt / European Patent Office / Office européen des brevets

(11) **EP 4 383 874 A1**

(12) **EUROPEAN PATENT APPLICATION**
published in accordance with Art. 153(4) EPC

(43) Date of publication:
**12.06.2024 Bulletin 2024/24**

(21) Application number: **21952268.7**

(22) Date of filing: **04.08.2021**

(51) International Patent Classification (IPC):
**H04W 72/04** (2023.01)

(52) Cooperative Patent Classification (CPC):
**H04W 72/04**

(86) International application number:
**PCT/CN2021/110690**

(87) International publication number:
**WO 2023/010368 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
- **JIANG, Qinyan
 Beijing 100022 (CN)**
- **WANG, Xin
 Beijing 100022 (CN)**
- **ZHANG, Lei
 Beijing 100022 (CN)**

(74) Representative: **Haseltine Lake Kempner LLP
Cheapside House
138 Cheapside
London EC2V 6BJ (GB)**

(54) **METHOD AND APPARATUS FOR TRANSCEIVING SIGNAL, AND COMMUNICATION SYSTEM**

(57) Embodiments of this disclosure provide an apparatus and method for transceiving a signal and a communication system. The apparatus for transceiving a signal is applicable to a network device, and includes a first transceiving unit configured to: transmit indication information indicating a frequency-domain position of a synchronization signal/PBCH block (SS/PBCH block, SSB), wherein in a case where a subcarrier spacing of the SSB is 960 kHz, the indication information does not indicate a frequency-domain position to which a sync raster with a predetermined global synchronization channel number (GSCN) corresponds.

1700

Apparatus for transceiving signal 1701

First transceiving unit

**FIG. 17**

EP 4 383 874 A1

**Description**

<u>Technical field</u>

This disclosure relates to the field of communication technologies.

<u>Background</u>

System Information (SI) includes a master information block (MIB) and a system information block (SIB), and is divided into minimum system information (SI) and other system information. The minimum SI includes basic information needed in performing initial access and information needed in obtaining the other SI by a terminal equipment. And the minimum SI may include an MIB and an SIB 1.

During an initial access procedure or for assisting an automatic neighbor cell relation (ANR) function of a serving cell, the terminal equipment receives a synchronization signal/physical broadcast channel block (SS/PBCH Block, SSB), and according to the received SSB, receives a physical downlink shared channel (PDSCH) for carrying SIB 1 scheduled by a physical downlink control channel (PDCCH), so as to obtain SIB 1.

It should be noted that the above description of the background is merely provided for clear and complete explanation of this disclosure and for easy understanding by those skilled in the art. And it should not be understood that the above technical solution is known to those skilled in the art as it is described in the background of this disclosure.

<u>Summary</u>

In order to utilize higher-frequency spectrum resources with larger available bandwidths, New Radio (NR) is supported to operate in higher frequency bands.

For example, in 3GPP Release 17 (Rel-17), a specified frequency range FR2 may be extended to cover 24.25 GHz to 71 GHz, wherein frequency range FR2-1 covers 24.25-52.6 GHz and frequency range FR2-2 covers 52.6-71 GHz.

Table 1 is a list of correspondences among the frequency range designation, a corresponding frequency range, and candidate subcarrier spacings (SCSs) of candidate subcarrier spacing (SCS) control resource set 0 (CORESET # 0) of SSB.

Table 1

| Frequency range designation | | Corresponding frequency range | Candidate SCS for SSB | Candidate SCS for CORESET#0 |
|---|---|---|---|---|
| FR1 | | 410 MHz - 7125 MHz | 15 kHz, 30 kHz | 15 kHz, 30 kHz |
| FR2 | FR2-1 | 24250 MHz-52600 MHz | 120 kHz, 240 kHz | 60 kHz, 120 kHz |
| | FR2-2 | 52600 MHz-71000 MHz | 120 kHz, 480 kHz, 960 kHz | 120 kHz, 480 kHz, 960 kHz |

As shown in Table 1, for the above FR2-2, SCSs that the SSB may use include 120 kHz, 480 kHz, and 960 kHz, and SCSs that SIB1 may use include 120 kHz, 480 kHz, and 960 kHz. However, there is currently no method of determination for how to transmit and receive an SSB or an SIB1 in a specified frequency range to which FR2-2 corresponds.

In order to solve at least one of the above problems, embodiments of this disclosure provide a method and apparatus for transceiving a signal and a communication system, wherein indication information indicating a frequency-domain position of an SSB is transmitted, which facilitates transmitting or receiving the SSB at the frequency-domain position indicated by the indication information.

According to an aspect of the embodiments of this disclosure, there is provided an apparatus for transceiving a signal, applicable to a network device, the apparatus including a first transceiving unit, the first transceiving unit being configured to:

transmit indication information indicating a frequency-domain position of the synchronization signal/PBCH block (SS/PBCH block, SSB),
wherein in a case where a subcarrier spacing of the SSB is 960 kHz, the indication information does not indicate a frequency-domain position to which a sync raster with a predetermined global synchronization channel number (GSCN) corresponds.

According to another aspect of the embodiments of this disclosure, there is provided an apparatus for transceiving a signal, applicable to a network device, the apparatus including a second transceiving unit, the second transceiving unit being configured to:

receive indication information indicating a frequency-domain position of a synchronization signal/PBCH block (SS/PBCH block, SSB),
wherein in a case where a subcarrier spacing of the SSB is 960 kHz, the indication information does not indicate a frequency-domain position to which a sync raster with a predetermined global synchronization channel number (GSCN) corresponds.

According to a further aspect of the embodiments of this disclosure, there is provided an apparatus for transceiving a signal, applicable to a network device, the apparatus including a third transceiving unit, the third transceiving unit being configured to:

transmit a synchronization signal/PBCH block (SSB),
wherein in a case where a subcarrier spacing of the SSB is 960 kHz, in a master information block (MIB) of the SSB, a cell selection-related field is set to be of a first predetermined value and/or a cell reselection-related field is set to be of a second predetermined value.

According to still another aspect of the embodiments of this disclosure, there is provided an apparatus for transceiving a signal, applicable to a network device, the apparatus including a fourth transceiving unit, the fourth transceiving unit being configured to:

transmit a synchronization signal/PBCH block (SSB), an MIB of the SSB including information used to indicate information related to contents of SIB1 associated with the SSB; and
transmit an SIB1 associated with the SSB.

According to yet another aspect of the embodiments of this disclosure, there is provided an apparatus for transceiving a signal, applicable to a terminal equipment, the apparatus including a fifth transceiving unit, the fifth transceiving unit being configured to:

receive a synchronization signal/PBCH block (SSB),
wherein in a case where a subcarrier spacing of the SSB is 960 kHz, in a master information block (MIB) of the SSB, a cell selection-related field is set to be of a first predetermined value and/or a cell reselection-related field is set to be of a second predetermined value.

According to yet still another aspect of the embodiments of this disclosure, there is provided an apparatus for transceiving a signal, applicable to a terminal equipment, the apparatus including a sixth transceiving unit, the sixth transceiving unit being configured to:

receive a synchronization signal/PBCH block (SSB), an MIB of the SSB including information used to indicate information related to contents of SIB1 associated with the SSB; and
receive an SIB1 associated with the SSB.

According to further still another aspect of the embodiments of this disclosure, there is provided an apparatus for transceiving a signal, applicable to a terminal equipment, the apparatus including a seventh transceiving unit, the seventh transceiving unit being configured to:

receive a synchronization signal/PBCH block (SSB) with a subcarrier spacing (SCS) being of 960 kHz; and
determine a control resource set 0 (CORESET#0) according to a sync raster defined for the SSB with the SCS being of 120 kHz or 480 kHz.

According to yet still another aspect of the embodiments of this disclosure, there is provided an apparatus for transceiving a signal, applicable to a network device, the apparatus including an eighth transceiving unit, the eighth transceiving unit being configured to:

transmit a synchronization signal/PBCH block (SSB) with a subcarrier spacing (SCS) being of 960 kHz; and
transmit indication information, the indication information indicating a frequency-domain position of a control resource set 0 (CORESET#0) according to a sync raster defined for an SSB with an SCS being of 120 kHz or 480 kHz.

According to yet further still another aspect of the embodiments of this disclosure, there is provided an apparatus for transceiving a signal, applicable to a terminal equipment, the apparatus including a ninth transceiving unit, the ninth transceiving unit being configured to:

receive an SSB and an SIB1 associated with the SSB; and
in a case where a subcarrier spacing of the SSB is 480 kHz or 960 kHz, and/or a subcarrier spacing of a PDCCH used to schedule a PDSCH carrying the SIB1 is 480 kHz or 960 kHz,
for the SSB with one time index, monitor the PDCCH only in one slot, or monitor the PDCCH over more than two inconsecutive slots.

An advantage of the embodiments of this disclosure exists in that indication information indicating a frequency-domain position of an SSB is transmitted, which facilitates transmitting or receiving the SSB at the frequency-domain position indicated by the indication information.
With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.
Features that are described and/or illustrated with respect to one embodiment may be used in the same way or in a similar way in one or more other embodiments and/or in combination with or instead of the features of the other embodiments.
It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of a communication system of this disclosure;
FIG. 2 is a schematic diagram of a frequency relationship between resource blocks (RBs) to which an SSB corresponds and a synchronization raster;
FIG. 3 is a schematic diagram of receiving an SSB and an SIB1 by a terminal equipment in an initial access procedure;
FIG. 4 is a schematic diagram of an ANR function;
FIG. 5 is a schematic diagram of receiving an SSB and an SIB1 by a terminal equipment in an ANR procedure;
FIG. 6 is a schematic diagram of the method for transceiving a signal of an embodiment of a first aspect of this disclosure;
FIG. 7 is a schematic diagram of the method for transceiving a signal of an embodiment of a second aspect of this disclosure;
FIG. 8 is a schematic diagram of the method for transceiving a signal of an embodiment of a third aspect;
FIG. 9 is another schematic diagram of the method for transceiving a signal of the embodiment of the third aspect;
FIG. 10 is a schematic diagram of the method for transceiving a signal of an embodiment of a fourth aspect;
FIG. 11 is another schematic diagram of the method for transceiving a signal of the embodiment of the fourth aspect;
FIG. 12 is a schematic diagram of the method for transceiving a signal of the embodiment of the fourth aspect;
FIG. 13 is a schematic diagram of the method for transceiving a signal of an embodiment of a sixth aspect;
FIG. 14 is a schematic diagram of the method for transceiving a signal of an embodiment of a seventh aspect;
FIG. 15 is a schematic diagram of Implementation 1 of operation 1402;
FIG. 16 is a schematic diagram of Implementation 2 of operation 1402;
FIG. 17 is a schematic diagram of the apparatus for transceiving a signal of an embodiment of an eighth aspect;
FIG. 18 is another schematic diagram of the apparatus for transceiving a signal of the embodiment of the eighth aspect;
FIG. 19 is a further schematic diagram of the apparatus for transceiving a signal of the embodiment of the eighth aspect;
FIG. 20 is still another schematic diagram of the apparatus for transceiving a signal of the embodiment of the eighth aspect;

FIG. 21 is a schematic diagram of the apparatus for transceiving a signal of an embodiment of a ninth aspect;

FIG. 22 is another schematic diagram of the apparatus for transceiving a signal of the embodiment of the ninth aspect;

FIG. 23 is a further schematic diagram of the apparatus for transceiving a signal of the embodiment of the ninth aspect;

FIG. 24 is still another schematic diagram of the apparatus for transceiving a signal of the embodiment of the ninth aspect;

FIG. 25 is yet another schematic diagram of the apparatus for transceiving a signal of the embodiment of the ninth aspect;

FIG. 26 is a schematic diagram of the terminal equipment of an embodiment of a tenth aspect;

FIG. 27 is a schematic diagram of the network device of the embodiment of the tenth aspect; and

FIG. 28 is a schematic diagram of Implementation 3 of operation 1402.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "according to" should be understood as "at least partially according to", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and New Radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), and an access terminal (AT), etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUSCH, and transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher-layer signaling may be, for example, radio resource control (RRC) signaling, such as being referred to as an RRC message, and including an MIB, system information, and a dedicated RRC message, or being referred to as an RRC IE (RRC information element). The higher-layer signaling may also be, for example, MAC (medium access control) signaling, or may be referred to as an MAC CE (MAC control element); however, this disclosure is not limited thereto.

Scenarios of the embodiments of this disclosure shall be described below by way of examples; however, this disclosure is not limited thereto.

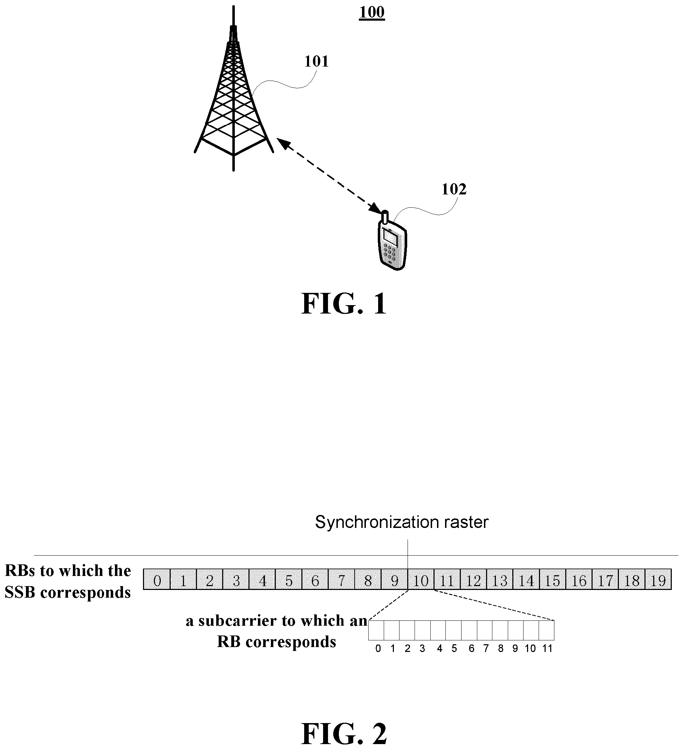

FIG. 1 is a schematic diagram of a communication system of this disclosure, in which a case where a terminal equipment and a network device are taken as examples is schematically shown. As shown in FIG. 1, a communication system 100 may include a network device 101 and a terminal equipment 102 (for the sake of simplicity, an example having only one terminal equipment is schematically given in FIG. 1).

In the embodiment of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC).

The terminal equipment 102 may transmit data to the network device 101, such as in a grant-free manner. The network device 101 may receive data transmitted by one or more terminal equipments 102, and feed back information to the terminal equipment 102, such as acknowledgement (ACK)/non-acknowledgement (NACK) information, and the terminal equipment 102 may acknowledge to terminate a transmission process, or may perform transmission of new data, or may perform data retransmission.

In addition, before the terminal equipment 102 is connected to the network device 101, the network device 101 may transmit information on system information to the terminal equipment 102. The terminal equipment 102 detects the received information, so as to achieve downlink synchronization and establish connection with the network device 101.

A global synchronization raster for a frequency range of 0~100 GHz is defined in NR. On this basis, SCSs for synchronization rasters and SSBs are further defined for operating bands.

Table 2 is a list of global synchronization channel number (GSCN) parameters for the global frequency raster.

Table 2

| Frequency range | SS block frequency position SSREF | GSCN | Range of GSCN |
|---|---|---|---|
| 0 - 3000 MHz | N * 1200 kHz + M * 50 kHz, N=1:2499, M ∈ {1,3,5} (Note) | 3N + (M-3)/2 | 2 - 7498 |
| 3000 - 24250 MHz | 3000 MHz + N * 1.44 MHz N= 0:14756 | 7499 + N | 7499 - 22255 |
| 24250 - 100000 MHz | 24250.08 MHz + N * 17.28 MHz N= 0:4383 | 22256 + N | 22256 - 26639 |
| NOTE: The default value for operating bands which only support SCS spaced channel raster(s) is M=3. | | | |

In the Table 2, SSREF denotes a reference frequency of a synchronization block.

FIG. 2 is a schematic diagram of a frequency relationship between resource blocks (RBs) to which the SSB corresponds and the synchronization raster.

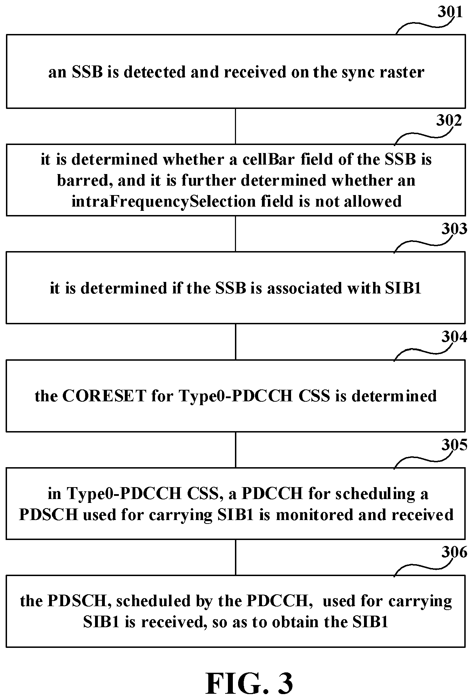

FIG. 3 is a schematic diagram of receiving the SSB and SIB1 by the terminal equipment in an initial access procedure. As shown in FIG. 3, in the initial access procedure, operations of receiving the SSB and the SIB1 by the terminal equipment 102 include:

> operation 301: an SSB is detected and received on the sync raster;
> operation 302: it is determined whether a cellbar field of the SSB is barred, and if yes, not needing to receive SIB1 according to the SSB (no matter whether the SSB has associated SIB1), and it is further determined whether an intraFrequencySelection field is notallowed, if yes, not needing to detect and receive other SSBs at the frequency-domain position of the SSB (i.e., the UE deems that access to a network is unable to be performed based on the SSB transmitted at the frequency-domain position; otherwise (i.e., intraFrequencySelection is allowed), proceeding to detect and receive other SSBs at the frequency-domain position of the SSB; furthermore, in operation 302, if it is determined that the cellbar field is not barred, proceeding with operation 303;
> operation 303: it is determined if the SSB is associated with SIB1 (or if there is CORESET (CORESET # 0) for TypeO-PDCCH CSS (i.e., a CORESET for a TypeO-PDCCH CSS, wherein the CSS is a common search space), or if the cell broadcasts SIB 1), and if yes, proceeding with operation 304; otherwise, detecting and receiving other SSBs;
> operation 304: the CORESET for TypeO-PDCCH CSS is determined;
> operation 305: in TypeO-PDCCH CSS, a PDCCH for scheduling a PDSCH used for carrying SIB 1 is monitored and received; and
> operation 306: the PDSCH, scheduled by the PDCCH, used for carrying SIB1 is received, so as to obtain the SIB 1.

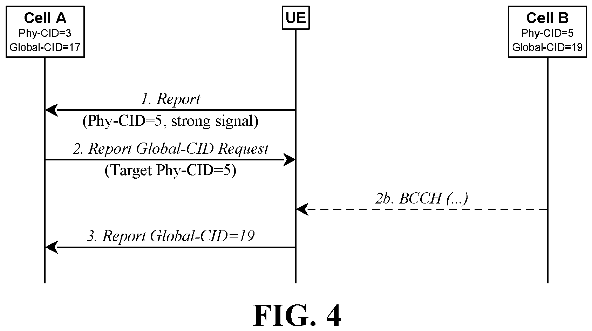

FIG. 4 is a schematic diagram of an ANR function. As shown in FIG. 4, the ANR function may include operations as follows:

> operation 1: a terminal equipment (e.g. UE) transmits a measurement report for cell B to cell A, wherein a physical CID (Phy-CID) of cell B is 5;
> operation 2:cell A transmits a report global CID request to the UE, so as to request the UE to transmit the Global CID of cell B with Phy-CID = 5 (i.e., cell A instructs the UE to read NCGI(s)/ECGI(s), TAC(s), RANAC(s), and PLMN ID(s), etc. broadcast by cell B (not all of them are necessarily broadcast);
> operation 2b: the UE obtains a broadcast channel (BCCH) from cell B (i.e., the UE receives an MIB and SIB1 from cell B, so as to read NCGI (s)/ECGI(s), TAC(s), RANAC(s), and PLMN ID(s), etc. (included in SIB1) broadcast by cell B; specifically, the UE may determine that the cell does not broadcast SIB1 according to the MIB carried by the SSB of SSB;
> operation 3: the UE transmits the Global CID of cell B to cell A (specifically, when cell B does not broadcast SIB 1, noSIB1 is reported).

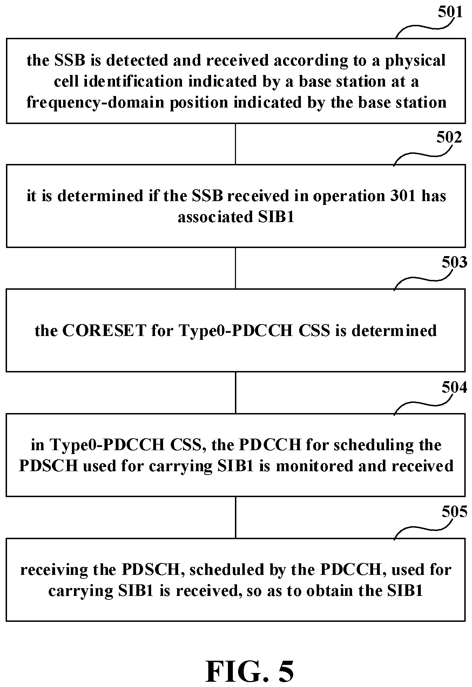

FIG. 5 is a schematic diagram of receiving the SSB and SIB1 by the terminal equipment in an ANR procedure. As shown in FIG. 5, during the ANR procedure, operations of receiving the SSB and SIB1 of the terminal equipment 102 include:

> operation 501: the SSB is detected and received according to a physical cell identification indicated by a base station at a frequency-domain position indicated by the base station;
> operation 502: it is determined if the SSB received in operation 301 has associated SIB1 (or if there exists a CORESET (CORESET # 0) forType0-PDCCH CSS, or if the cell broadcasts SIB1), if yes, proceeding with operation 503, and if no, turning back to operation 501;
> operation 503: the CORESET for TypeO-PDCCH CSS is determined;
> operation 504: in TypeO-PDCCH CSS, the PDCCH for scheduling the PDSCH used for carrying SIB 1 is monitored and received; and
> operation 505: receiving the PDSCH, scheduled by the PDCCH, used for carrying SIB 1 is received, so as to obtain the SIB 1.

In the embodiments of this disclosure, use of a frequency-domain position of a sync raster to which an SSB of a subcarrier spacing (SCS) corresponds (or a frequency-domain position of a sync raster defined for an SSB of an SCS refers to that a terminal equipment (e.g. a UE) blindly detects (e.g. when signaling indicating a frequency-domain position of an SSB, detects and receives) the frequency-domain position based on which the SSB of the SCS is used.

Embodiment of a first aspect

The embodiment of the first aspect provides a method for transceiving a signal, applicable to a network device, such as the network device 101 in FIG. 1.

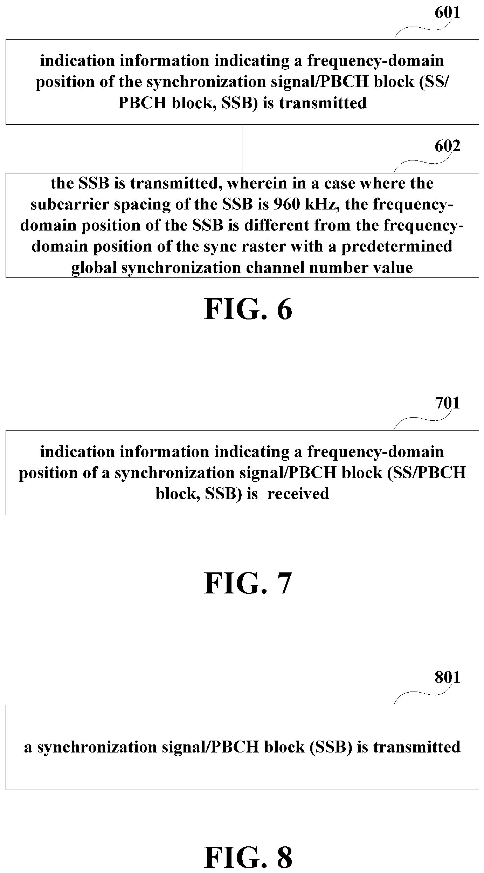

FIG. 6 is a schematic diagram of the method for transceiving a signal of the embodiment of the first aspect of this disclosure. As shown in FIG. 6, the method includes:

operation 601: indication information indicating a frequency-domain position of the synchronization signal/PBCH block (SS/PBCH block, SSB) is transmitted.

In operation 601, in a case where a subcarrier spacing of the SSB is 960 kHz, the indication information does not indicate a frequency-domain position to which a sync raster with a predetermined global synchronization channel number (GSCN) corresponds. That is, the frequency-domain position indicated by the indication information is different from (i.e. is unable to be, or should not be) a frequency-domain position to which a sync raster with a predetermined GSCN value corresponds.

In the embodiment of the first aspect, the SSB may be transmitted in a frequency range of FR2-2. And furthermore, the sync raster with a predetermined GSCN value may also be within the frequency range of FR2-2.

In the embodiment of the first aspect, the indication information may be included in RRC signaling. For example, when the radio resource control (RRC) signaling indicates the frequency-domain position of the SSB with an SCS being of 960 kHz, the frequency-domain position to which the sync raster with the predetermined GSCN value corresponds is not indicated.

In at least one embodiment, in a case where a corresponding synchronization raster is not defined for the SSB with an SCS being of 960 kHz, the sync raster with a predetermined global synchronization channel number value (GSCN value) refers to a sync raster defined by an SSB of 120 kHz and/or 480 kHz (that is, a sync raster for blindly detecting an SSB with an SCS being of 120 kHz, and/or a sync raster for blindly detecting an SSB with an SCS being of 480 kHz). For example, when the radio resource control (RRC) signaling indicates the frequency-domain position of the SSB with an SCS being of 960 kHz, a frequency-domain position corresponding to the GSCN value of 120 kHz and/or 480 kHz is unable to be indicated. Therefore, a requirement for forward compatibility may be satisfied.

Considerations regarding the forward compatibility are as follows:

As the SSB using 960 kHz in Rel-17 is not used to support initial access, the MIB and/or associated SIB1 included therein may not include necessary information for supporting the initial access; for example, SIB1 may not include inservingCellConfigCommon, etc., in which case the SSB is not used for the initial access. That is, even if the UE is able to receive the SSB in the initial access, it is unable to complete the initial access to the network based on the SSB. If in the current release (Rel-17), the SSB is able to transmit at any frequency-domain position, while a subsequent release (e.g. Rel-18) supports initial access of an SSB based on 960 kHz (that is, in the subsequent release, the UE blindly detects the SSB with an SCS being of 960 kHz), the initial access of the UE in the subsequent release may be affected.

For example, the UE in the subsequent release may receive the SSB with an SCS being of 960 kHz in performing initial access, but it is unable to obtain necessary information for supporting the initial access based on the SSB, thereby being unable to complete the initial access based on the SSB, and increasing latency and complexity of the UE in performing the initial access. By limiting the frequency-domain position of the SSB with an SCS being of 960 kHz in the current release, a possibility that the SSB with an SCS being of 960 kHz is blindly detected in the subsequent release based on the frequency-domain position that is unable to be used in the current release may be kept, thereby avoiding a potential negative impact of the SSB with an SCS being of 960 kHz in the current release on the subsequent release and ensuring the forward compatibility.

In a specific example, the RRC signaling may be MeasObjectNR. For example, when ssbSubcarrierSpacing in the MeasObjectNR indicates 960 kHz, the ssbFrequency in the MeasObjectNR is unable to indicate the frequency-domain position of the GSCN value corresponding 120 kHz and/or 480 kHz, as shown in Table 3 below.

Table 3

| MeasObjectNR ::= | SEQUENCE { | |
|---|---|---|
| ssbFrequency | | ARFCN-ValueNR |
| OPTIONAL, -- Cond SSBorAssociatedSSB | | |
| ssbSubcarrierSpacing | | SubcarrierSpacing |
| OPTIONAL, -- Cond SSBorAssociatedSSB | | |
| ... | | |

---

*ssbFrequency*

Indicates the frequency of the SS associated to this *MeasObjectNR*. For operation with shared spectrum channel access, this field is a k*30 kHz shift from the sync raster where k = 0,1,2, and so on if the *reportType* within the corresponding *ReportConfigNR* is set to reportCGI (see TS 38.211 [16], clause 7.4.3.1). Frequencies are considered to be on the sync raster if they are also identifiable with a GSCN value (see TS 38.101-1 [15]). For the case when *ssbSubcarrierSpacing* indicates 960kHz, the indicated frequency shall not be on the sync raster identified with a GSCN value corresponding to 120kHz and/or 480kHz （FR2-2）.

---

*ssbSubcarrierSpacing*

Subcarrier spacing of SSB. Only the values 15 kHz or 30 kHz (FR1), 120 kHz or 240 kHz (FR2-1), and 120 kHz, 480kHz, or 960kHz （FR2-2） are applicable.

---

In another specific example, the RRC signaling may be *ServingCellConfigCommon*. For example, when ssb-SubcarrierSpacing in ServingCellConfigCommon indicates 960 kHz, absoluteFrequencySSB in DownlinkConfigCommon (in frequencyInfoDL) in ServingCellConfigCommon is unable to indicate the frequency-domain position of the GSCN value corresponding 120 kHz and/or 480 kHz.

In at least another embodiment, the sync raster with a predetermined global synchronization channel number value (GSCN value) is a sync raster defined for the SSB with an SCS being of 960 kHz. For example, in a case where a corresponding sync raster is defined for the SSB with an SCS being of 960 kHz, when the RRC signaling indicates the frequency-domain position of the SSB with an SCS being of 960 kHz, the frequency-domain position of the GSCN value corresponding to 960 kHz is not indicated (e.g. is unable to be indicated), and the SSB is not (e.g. is unable to be) transmitted on the sync raster defined for 960 kHz.

In the embodiment of the first aspect, as shown in FIG. 6, the method for transceiving a signal may further include: operation 602: the SSB is transmitted, wherein in a case where the subcarrier spacing of the SSB is 960 kHz, the frequency-domain position of the SSB is different from the frequency-domain position of the sync raster with a predetermined global synchronization channel number value (GSCN value).

The SSB transmitted in operation 602 is the SSB indicated by the indication information in operation 601.

And furthermore, the network device/cell that transmits the SSB in operation 602 may be identical to or different from the network device/cell that transmits the indication information in operation 601. Therefore, in the case where the SCS of the transmitted SSB is 960 kHz, the network device limits the frequency-domain position of the SSB with an SCS being of 960 kHz in the current release, so that the frequency-domain position of the SSB is different from the frequency-domain position to which the sync raster with the predetermined GSCN value corresponds, which is at the terminal equipment side. This allows the terminal equipment to keep a possibility that the SSB with an SCS being of 960 kHz is blindly detected to perform initial access in the subsequent release based on the frequency-domain position that is unable to be used in the current release, thereby avoiding a potential negative impact of the SSB with an SCS being of 960 kHz in the current release on the subsequent release and ensuring the forward compatibility.

Embodiment of a second aspect

At least addressed to the same problem as the embodiment of the first aspect, the embodiment of the second aspect of this disclosure provides a method for transceiving a signal, applicable to a terminal equipment. The method for transceiving a signal in the embodiment of the second aspect corresponds to the method for transceiving a signal in the embodiment of the first aspect.

As shown in FIG. 7, the method for transceiving a signal includes:

operation 701: indication information indicating a frequency-domain position of a synchronization signal/PBCH block (SS/PBCH block, SSB) is received.

In operation 701, in a case where a subcarrier spacing of the SSB is 960 kHz, the indication information does not indicate a frequency-domain position to which a sync raster with a predetermined global synchronization channel number (GSCN) value corresponds.

For example, the indication information is included in RRC signaling.

In at least one embodiment, the sync raster with a predetermined global synchronization channel number (GSCN) value is a sync raster defined for an SSB(s) of 120 kHz and/or 480 kHz.

In at least one other embodiment, the sync raster with a predetermined global synchronization channel number (GSCN) value is a sync raster defined for an SSB with an SCS being of 960 kHz.

In the embodiment of the second aspect, the SSB is transmitted in a frequency range of FR2-2. And furthermore, the sync raster is in the frequency range of FR2-2.

According to the embodiment of the second aspect, the indication information indicating the frequency-domain position of the SSB is received, which facilitates transmitting or receiving the SSB at the frequency-domain position indicated by the indication information, thereby ensuring the forward compatibility.

Embodiment of a third aspect

The embodiment of the third aspect provides a method for transceiving a signal, applicable to a network device, such as the network device 101 in FIG. 1.

FIG. 8 is a schematic diagram of the method for transceiving a signal of the embodiment of the third aspect. As shown in FIG. 8, the method includes:

operation 801: a synchronization signal/PBCH block (SSB) is transmitted.

In operation 801, in a case where a subcarrier spacing of the SSB is 960 kHz, in a master information block (MIB) of the SSB, a cell selection-related field is set to be of a first predetermined value and/or a cell reselection-related field is set to be of a second predetermined value.

In at least one embodiment, the cell selection-related field is a cellbar (cellbar) field, and a cell reselection-related field is an intra-frequency cell reselection (intraFreqReselection) field, wherein the first predetermined value is a value indicating barred, and the second predetermined value is a value indicating allowed, as shown in Table 4.

Table 4

| MIB ::= | SEQUENCE { |
|---|---|
| systemFrameNumber | BIT STRING (SIZE (6)), |
| subCarrierSpacingCommon | ENUMERATED {scs15or60, scs30or120}, |
| ssb-SubcarrierOffset | INTEGER (0..15), |
| dmrs-TypeA-Position | ENUMERATED {pos2, pos3}, |

| | |
|---|---|
| pdcch-ConfigSIB1 | PDCCH-ConfigSIB1, |
| cellBarred | ENUMERATED {barred, notBarred}, |
| intraFreqReselection | ENUMERATED {allowed, notAllowed}, |
| spare | BIT STRING (SIZE (1)) |
| } | |
| ***MIB* field descriptions** | |
| ***cellBarred***<br>Value *barred* means that the cell is barred, as defined in TS 38.304 [20]. This field is ignored by IAB-MT. When the SCS of the corresponding SSB is 960kHz，the value shall be set to barred. | |
| ***intraFreqReselection***<br>Controls cell selection/reselection to intra-frequency cells when the highest ranked cell is barred, or treated as barred by the UE, as specified in TS 38.304 [20]. This field is ignored by IAB-MT. When the SCS of the corresponding SSB is 960kHz，the value shall be set to allowed. | |

In the information fields included in the MIB, cellBarred and intraFreqSelection are used to indicate information on cell selection and reselection. In existing techniques, when an SSB of an SCS is not used for cell selection and reselection, these two information fields has no effect, which means that these two information fields may be set to be of any values. If the SSB with an SCS being of 960 kHz is possibly unable to be used for cell selection and reselection, according to existing techniques, the two information fields may also be set to be of any values. However, a problem of compatibility may occur.

Therefore, taking forward compatibility into account, it is needed to limit the values of the two information fields in the SSB with an SCS being of 960 kHz. For example, for the SSB with an SCS being of 960 kHz, cellBarred of the MIB in the SSB must indicate barred, and/or intraFreqSelection must indicate allowed. For example, as shown in Table 4, for the SSB with an SCS being of 960 kHz, cellBarred of the MIB in the SSB must indicate barred, and intraFreqSelection must indicate allowed. The frequency-domain position of the SSB may be limited (as described in the embodiment of the first aspect) or may be unlimited. That is, the embodiments of the first aspect and the second aspect may be combined in one implementation, and furthermore, the embodiments of the first aspect and the second aspect may also be implemented separately in different implementations.

For example, cellBarred must indicate that the barred is another way to solve the problem of forward compatibility described in 1. In this way, even if the UE in the subsequent release receive the SSB with an SCS being of 960 kHz that is unable to be used for initial access in performing initial access, as its cellBarred must indicate barred, the UE does not further receive its associated SIB 1 based on the indication of the SSB, thereby reducing the impact on the initial access of the UE in the subsequent release to some extent.

And a reason why intraFreqSelection must indicate allowed is that in a conventional method, if cellBarred in an MIB of a highest ranked cell indicates barred, while intraFreqSelection indicates notAllowed, the terminal equipment may deem that the network does not allow selection or reselection of intra-frequency cells, that is, for the network device, cells transmitting SSBs at this frequency-domain position are all barred from accessing. If the SSB with an SCS being of 960 kHz in the current release is transmitted at any frequency-domain position and a value of intraFreqSelection is arbitrary, as the UE in the subsequent release may detect the SSB with an SCS being of 960 kHz in the initial access, in the embodiment of the second aspect, a value of intraFreqSelection is made to be of the second predetermined value (allowed).

In at least one embodiment, the SSB is transmitted within the frequency range of FR2-2.

In at least one embodiment, the sync raster is within the frequency range of FR2-2.

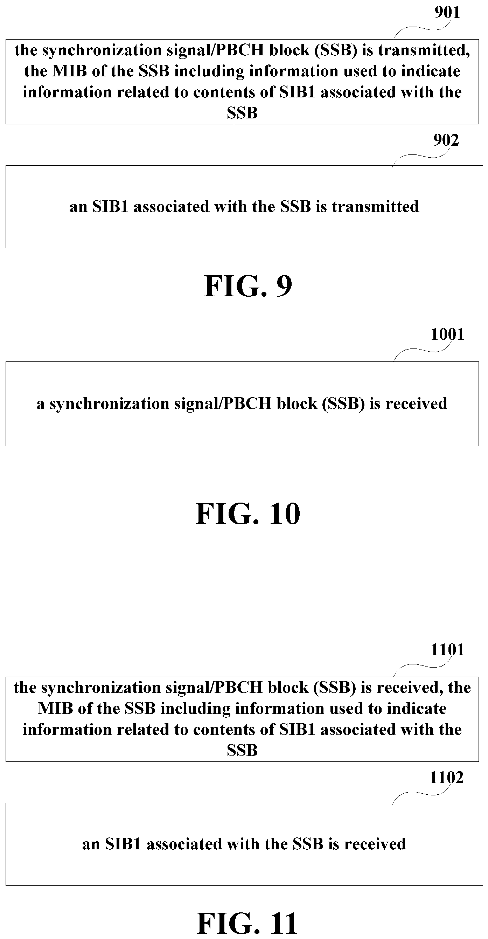

FIG. 9 is another schematic diagram of the method for transceiving a signal of the embodiment of the third aspect. As shown in FIG. 9, the method for transceiving a signal includes:

operation 901: the synchronization signal/PBCH block (SSB) is transmitted, the MIB of the SSB including information used to indicate information related to contents of SIB1 associated with the SSB; and

operation 902: an SIB1 associated with the SSB is transmitted.

In operation 901, in a case where the SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access. Hence, a potential negative impact of the SSB with an SCS being of 960 kHz in the current release on the subsequent release may be avoided, and the forward compatibility may be ensured.

In operation 901, the SSB is received within the frequency range of FR2-2. And furthermore, in operation 901, the sync raster is within the frequency range of FR2-2.

According to the third embodiment, a potential negative impact of the SSB with an SCS being of 960 kHz in the current release on the subsequent release may be avoided, and the forward compatibility may be ensured.

Embodiment of a fourth aspect

At least addressed to the same problem as the embodiment of the third aspect, the embodiment of the fourth aspect of this disclosure provides a method for transceiving a signal, applicable to a terminal equipment. The method for transceiving a signal in the embodiment of the fourth aspect corresponds to the method for transceiving a signal in the embodiment of the third aspect.

FIG. 10 is a schematic diagram of the method for transceiving a signal of the embodiment of the fourth aspect. As shown in FIG. 10, the method for transceiving a signal of the embodiment of the fourth aspect includes:

operation 1001: a synchronization signal/PBCH block (SSB) is received.

In operation 1001, in a case where a subcarrier spacing of the SSB is 960 kHz, in a master information block (MIB) of the SSB, a cell selection-related field is set to be of a first predetermined value and/or a cell reselection-related field is set to be of a second predetermined value.

For example, the cell selection-related field is a cellbar (cellbar) field, and the cell reselection-related field is an intra-frequency cell reselection (intraFreqReselection) field, wherein the first predetermined value is a value indicating barred, and the second predetermined value is a value indicating allowed.

FIG. 11 is another schematic diagram of the method for transceiving a signal of the embodiment of the fourth aspect. As shown in FIG. 11, the method for transceiving a signal includes:

operation 1101: the synchronization signal/PBCH block (SSB) is received, the MIB of the SSB including information used to indicate information related to contents of SIB1 associated with the SSB; and

operation 1102: an SIB1 associated with the SSB is received.

In operation 1101, in a case where the SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access.

In operations 1001 and 1101, the SSB is received within the frequency range of FR2-2. And in operations 1001 and 1101, the sync raster is within the frequency range of FR2-2.

According to the fourth embodiment, a potential negative impact of the SSB with an SCS being of 960 kHz in the current release on the subsequent release may be avoided, and the forward compatibility may be ensured.

Embodiment of a fifth aspect

The embodiment of the fifth aspect provides a method for transceiving a signal, applicable to a terminal equipment, such as the terminal equipment 102 in FIG. 1.

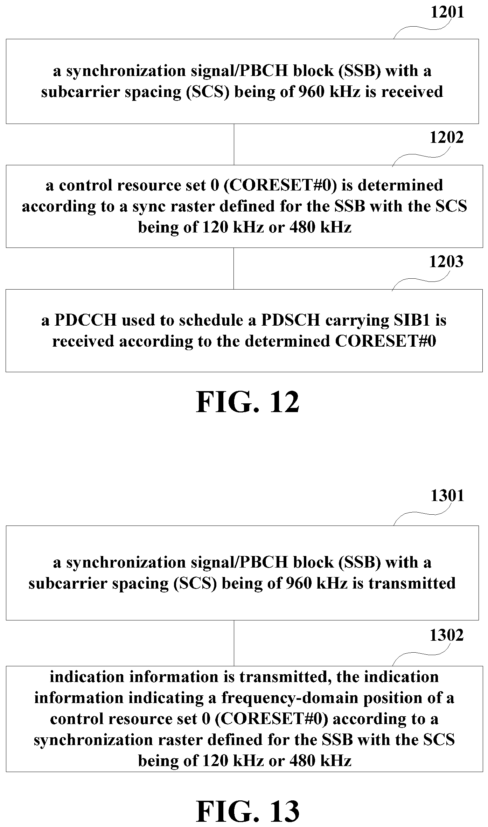

FIG. 12 is a schematic diagram of the method for transceiving a signal of the embodiment of the fourth aspect. As shown in FIG. 12, the method for transceiving a signal of the embodiment of the fifth aspect includes:

operation 1201: a synchronization signal/PBCH block (SSB) with a subcarrier spacing (SCS) being of 960 kHz is received; and

operation 1202: a control resource set 0 (CORESET#0) is determined according to a sync raster defined for the SSB with the SCS being of 120 kHz or 480 kHz.

As shown in FIG. 12, the method further includes:

operation 1203: a PDCCH used to schedule a PDSCH carrying SIB1 is received according to the determined CORESET#0.

In operation 1201, the SSB is received in a frequency range of FR2-2.

The sync raster concerned in operation 1202 is in the frequency range of FR2-2.

In the embodiment of the fifth aspect, the terminal equipment determines CORESET # 0 according to the sync raster to which the SSB with an SCS being of 120 kHz or 480 kHz (i.e., a second SSB) corresponds upon receiving the SSB with an SCS being of 960 kHz (i.e., a first SSB), so as to receive the PDCCH for scheduling the PDSCH carrying SIB1. The second SSB may be actually transmitted (that is, it is an actually transmitted SSB), or the second SSB may also be not actually transmitted (that is, it is not an actually transmitted SSB).

Embodiment of a sixth aspect

The embodiment of the sixth aspect provides a method for transceiving a signal, applicable to a network device, such as the network device 101 in FIG. 1.

FIG. 13 is a schematic diagram of the method for transceiving a signal of the embodiment of the sixth aspect. As shown in FIG. 13, the method for transceiving a signal of the embodiment of the sixth aspect includes:

operation 1301: a synchronization signal/PBCH block (SSB) with a subcarrier spacing (SCS) being of 960 kHz is transmitted; and

operation 1302: indication information is transmitted, the indication information indicating a frequency-domain position of a control resource set 0 (CORESET#0) according to a synchronization raster defined for the SSB with the SCS being of 120 kHz or 480 kHz.

In operation 1301, the SSB is transmitted in a frequency range of FR2-2.

The sync raster concerned in operation 1302 is in the frequency range of FR2-2.

In the embodiment of the sixth aspect, the indication information transmitted in operation 1302 may indicate the frequency-domain position of the control resource set 0 (CORESET#0) according to the synchronization raster defined for the SSB with the SCS being of 120 kHz or 480 kHz (i.e., the second SSB). Hence, after receiving the SSB with the SCS being of 960 kHz (i.e., the first SSB), the terminal equipment determines CORESET#0 according to the synchronization raster defined for the SSB with the SCS being of 120 kHz or 480 kHz (i.e. the second SSB), so as to receive the PDCCH for scheduling the PDSCH carrying SIB1. That is, after receiving the SSB with the SCS being of 960 kHz (i.e., the first SSB), the terminal equipment performs blind detection at the frequency-domain position of the sync raster to which the SSB with the SCS being of 120 kHz or 480 kHz (i.e., the second SSB) corresponds, so as to receive the PDCCH for scheduling the PDSCH carrying SIB1.

Embodiment of a seventh aspect

The embodiment of the seventh aspect provides a method for transceiving a signal, applicable to a terminal equipment, such as the terminal equipment 102 in FIG. 1.

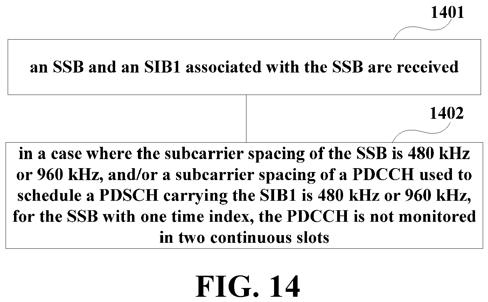

FIG. 14 is a schematic diagram of the method for transceiving a signal of the embodiment of the seventh aspect. As shown in FIG. 14, the method for transceiving a signal includes:

operation 1401: an SSB and an SIB1 associated with the SSB are received; and

operation 1402: in a case where the subcarrier spacing of the SSB is 480 kHz or 960 kHz, and/or a subcarrier spacing of a PDCCH used to schedule a PDSCH carrying the SIB1 is 480 kHz or 960 kHz, for the SSB with one time index, the PDCCH is not monitored in two continuous slots.

In operation 1401, the SSB and SIB1 are received in a frequency range of FR2-2.

In Implementation 1 of operation 1402, in a case where the subcarrier spacing of the SSB is 480 kHz or 960 kHz, and/or the subcarrier spacing of the PDCCH used to schedule the PDSCH carrying the SIB1 is 480 kHz or 960 kHz, for the SSB with an index (a time index used to characterize a time-domain position of an SSB in a transmission window, such as an SSB index, or a candidate SSB index), the UE monitors the PDCCH only in one slot. For example, for an SSB with an index, the UE monitors a PDCCH in a slot n_0 determined in a method shown in Table 5. Here, the slot is based on the SCS of the above PDCCH, or an SCS to which the slot corresponds is the SCS of the above PDCCH.

Table 5

a UE monitors PDCCH in the TypeO-PDCCH CSS set in slot $n_0$ . For SS/PBCH block with index $i$ , the UE determines an index of slot $n_0$ as $$n_0 = \left(O \cdot 2^\mu + \lfloor i \cdot M \rfloor\right) \bmod N_{\text{slot}}^{\text{frame},\mu}$$ that is in a frame with system frame number (SFN) SFN$_C$ satisfying SFN$_C$ mod2 = 0 if $$\left\lfloor \left(O \cdot 2^\mu + \lfloor i \cdot M \rfloor\right) / N_{\text{slot}}^{\text{frame},\mu} \right\rfloor \bmod 2 = 0$$ , or in a frame with SFN satisfying SFN$_C$mod2=1 if $$\left\lfloor \left(O \cdot 2^\mu + \lfloor i \cdot M \rfloor\right) / N_{\text{slot}}^{\text{frame},\mu} \right\rfloor \bmod 2 = 1$$ . M and O are provided by a table, and $\mu \in \{0,1,2,3\}$ based on the SCS for PDCCH receptions in the CORESET [4, TS 38.211]. The index for the first symbol of the CORESET in slots $n_0$ is the first symbol index provided by the table.

Table 6

| Index (indicated by pdcch-ConfigSIB1 in the MIB) | O | Number of search space sets per slot | M | First symbol index |
|---|---|---|---|---|
| 0 | 0 | 1 | 1 | 0 |
| 1 | 0 | 2 | 1/2 | {0, if *i* is even}, {7, if *i* is odd} |
| 2 | 2.5 | 1 | 1 | 0 |
| 3 | 2.5 | 2 | 1/2 | {0, if *i* is even}, {7, if *i* is odd} |
| 4 | 5 | 1 | 1 | 0 |
| 5 | 5 | 2 | 1/2 | {0, if *i* is even}, {7, if *i* is odd} |
| 6 | 0 | 2 | 1/2 | {0, if *i* is even}, { $N_{\text{symb}}^{\text{CORESET}}$ , if i is odd} |
| 7 | 2.5 | 2 | 1/2 | {0, if *i* is even}, { $N_{\text{symb}}^{\text{CORESET}}$ , if i is odd} |
| 8 | 5 | 2 | 1/2 | {0, if *i* is even}, { $N_{\text{symb}}^{\text{CORESET}}$ , if i is odd} |
| 9 | 7.5 | 1 | 1 | 0 |

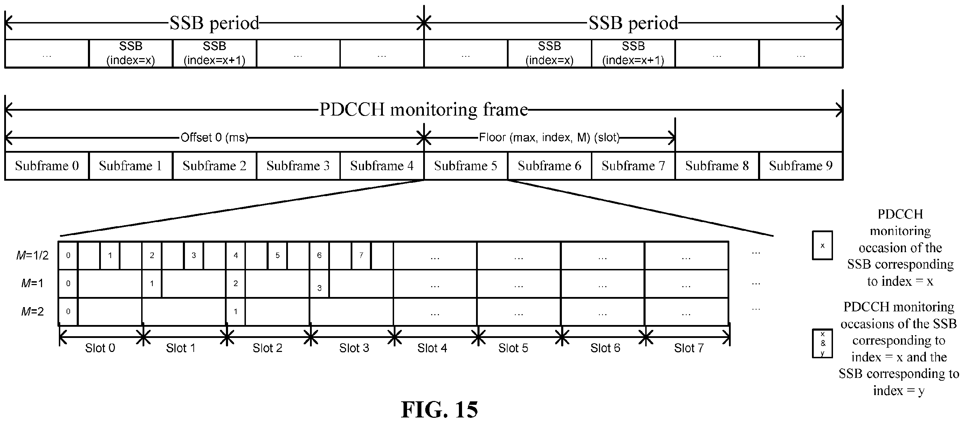

FIG. 15 is a schematic diagram of Implementation 1 of operation 1402. As shown in FIG. 15, it is assumed that based on the configuration in Table 6, in a case where M = 1/2, M = 1 and M = 2, for an SSB with an index, the terminal equipment only monitors the PDCCH in one slot.

In Implementation 2 of operation 1402, in the case where the subcarrier spacing of the SSB is 480 kHz or 960 kHz and/or the subcarrier spacing of the PDCCH used to schedule the PDCCH for carrying the SIB1 is 480 kHz or 960 kHz, for an SSB with an index (a time index), the terminal equipment monitors the PDCCH over two or more inconsecutive slots. For example, as shown in Table 7, for an SSB with an index, the PDCCH is monitored in slots n_0 and n_0+k (k >= 2). Here, the slot is based on the SCS of the above PDCCH, or in other words, an SCS to which the slot corresponds is the SCS of the above PDCCH.

Table 7

<table>
<tr><td>a UE monitors PDCCH in the TypeO-PDCCH CSS set in slot $n_0$ and $n_0 + k$ .For SS/PBCH block with index $i$ , the UE determines an index of slot $n_0$ as $$n_0 = \left( O \cdot 2^{\mu} + \left\lfloor i \cdot M \right\rfloor \right) \bmod N_{\text{slot}}^{\text{frame},\mu}$$ that is in a frame with system frame number (SFN) SFN$_C$ satisfying SFN$_C$ mod2 = 0 if $$\left\lfloor \left( O \cdot 2^{\mu} + \left\lfloor i \cdot M \right\rfloor \right) / N_{\text{slot}}^{\text{frame},\mu} \right\rfloor \bmod 2 = 0$$ , or in a frame with SFN satisfying SFN$_C$ mod2=1 if $$\left\lfloor \left( O \cdot 2^{\mu} + \left\lfloor i \cdot M \right\rfloor \right) / N_{\text{slot}}^{\text{frame},\mu} \right\rfloor \bmod 2 = 1$$ . M and O are provided by a table, and $\mu \in$ {0,1,2,3} based on the SCS for PDCCH receptions in the CORESET [4, TS 38.211]. The index for the first symbol of the CORESET in slots $n_0$ and $n_0 + k$ is the first symbol index provided by the table.</td></tr>
</table>

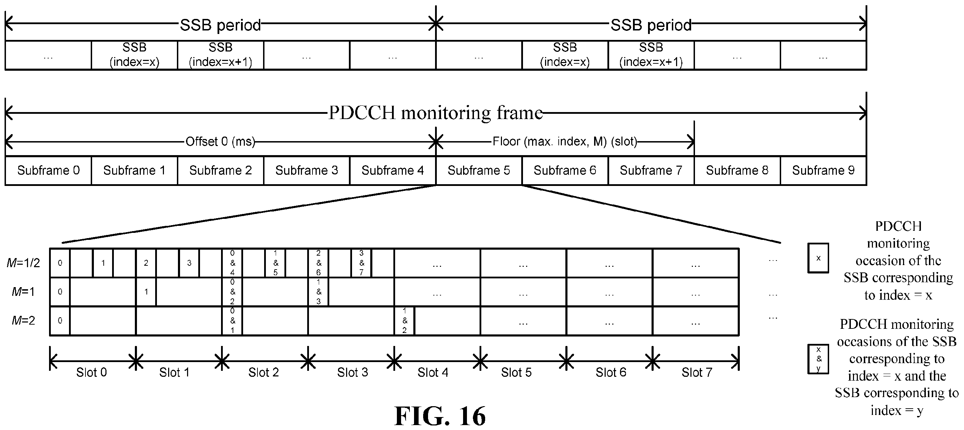

FIG. 16 is a schematic diagram of Implementation 2 of operation 1402. As shown in FIG. 16, it is assumed that k = 2. As shown in FIG. 16, in a case where M = 1/2, M=1 and M = 2, for an SSB with an index, the terminal equipment may monitor the PDCCH over two or more inconsecutive slots.

In Implementation 2 of operation 1402, the two or more inconsecutive slots may be predefined or are indicated by the SSB received in operation 1401.

In operation 1402, in the more than two inconsecutive slots, there may exist a number of slots spaced between the slots, the number of the slots being predefined or being indicated by the SSB received in operation 1401. For example, in the above example, a value of k is predefined or is indicated by the MIB the SSB. Hence, the terminal equipment may determine positions of slots n_0 and slot n_0+k, thereby monitoring the PDCCH.

In addition, in at least one embodiment, operation 1402 may be replaced with operations of Implementation 3 below. In Implementation 3, in the case where the subcarrier spacing of the SSB is 480 kHz or 960 kHz and/or the subcarrier spacing of the PDCCH used to schedule the PDCCH for carrying SIB1 is 480 kHz or 960 kHz, the slot for monitoring the PDCCH may be determined according to a reference SCS (e.g. 120 kHz). The reference SCS is different from the SCS of the PDCCH used to schedule the PDCCH for carrying SIB1 (i.e., the PDCCH to be monitored).

For example, for an SSB with an index, the method in Table 7 may be used to determine first slots n_0 and n_0+k (e.g, k = 1) monitoring the PDCCH based on the reference SCS. Furthermore, slots n_0 and n_(0+m) included in the first slots n_0 and n_0+k monitoring the PDCCH based on the SCS of the above PDCCH to be monitored may be determined, and the PDCCH may be monitored at the slots n_0 and n_(0+m) based on the SCS of the above PDCCH to be monitored.

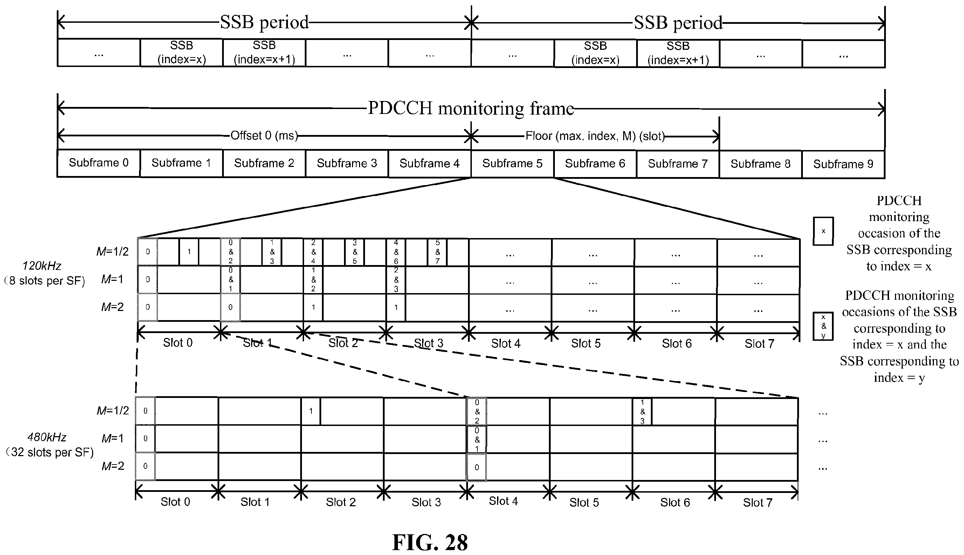

FIG. 28 is a schematic diagram of Implementation 3 of operation 1402. In FIG. 28, the reference SCS is 120 kHz, and the SCS of the PDCCH is 480 kHz.

In at least one embodiment, the methods of Implementation 1, Implementation 2 and Implementation 3 may be combined. For example, different methods are respectively adopted for configurations of different indices; and for another example, different methods are respectively used for different values of M. In the embodiment of the seventh aspect, the problem of how to determine and monitor the PDCCH scheduling the PDSCH carrying SIB1 may be solved.

Embodiment of an eighth aspect

The embodiment of this disclosure provides an apparatus for transceiving a signal, applicable to a network device.

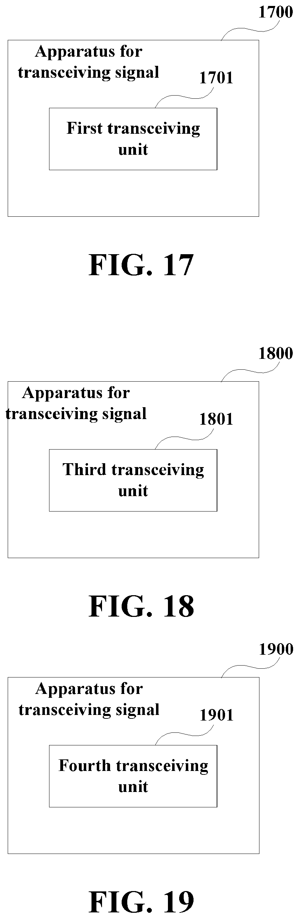

FIG. 17 is a schematic diagram of the apparatus for transceiving a signal of the embodiment of the eighth aspect. As shown in FIG. 17, an apparatus 1700 for transceiving a signal includes a first transceiving unit 1701, the first transceiving unit 1701 being configured to:

transmit indication information indicating a frequency-domain position of a synchronization signal/PBCH block (SS/PBCH block, SSB),
wherein in a case where a subcarrier spacing of the SSB is 960 kHz, the indication information does not indicate a frequency-domain position to which a sync raster with a predetermined global synchronization channel number (GSCN) corresponds.

Reference may be made to the embodiment of the first aspect for explanations of the apparatus 1700 for transceiving a signal.

FIG. 18 is another schematic diagram of the apparatus for transceiving a signal of the embodiment of the eighth aspect. As shown in FIG. 18, an apparatus 1800 for transceiving a signal includes a third transceiving unit 1801, the third transceiving unit 1801 being configured to:

transmit a synchronization signal/PBCH block (SSB), wherein in a case where a subcarrier spacing of the SSB is 960 kHz, in a master information block (MIB) of the SSB, a cell selection-related field is set to be of a first predetermined value and/or a cell reselection-related field is set to be of a second predetermined value.

Reference may be made to the embodiment of the third aspect for explanations of the apparatus 1800 for transceiving a signal.

FIG. 19 is a further schematic diagram of the apparatus for transceiving a signal of the embodiment of the eighth aspect. As shown in FIG. 19, an apparatus 1900 for transceiving a signal includes a fourth transceiving unit 1901, the fourth transceiving unit 1901 being configured to:

transmit a synchronization signal/PBCH block (SSB), wherein in a case where a subcarrier spacing of the SSB is 960 kHz, in a master information block (MIB) of the SSB, a cell selection-related field is set to be of a first predetermined value and/or a cell reselection-related field is set to be of a second predetermined value.

Reference may be made to the embodiment of the third aspect for explanations of the apparatus 1900 for transceiving a signal.

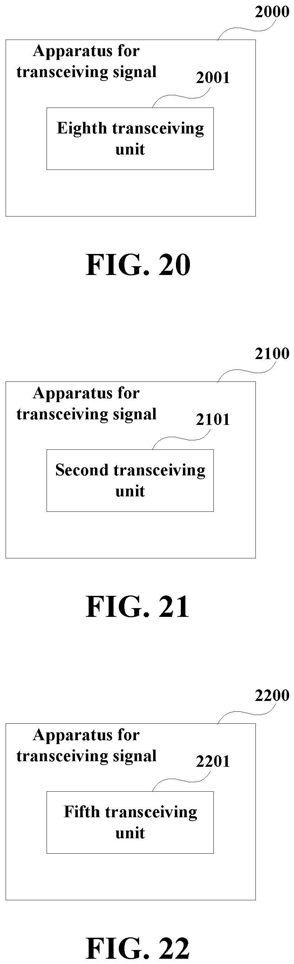

FIG. 20 is still another schematic diagram of the apparatus for transceiving a signal of the embodiment of the eighth aspect. As shown in FIG. 20, an apparatus 2000 for transceiving a signal includes an eighth transceiving unit 2001, the eighth transceiving unit 2001 being configured to:

transmit a synchronization signal/PBCH block (SSB) with a subcarrier spacing (SCS) being of 960 kHz; and
transmit indication information, the indication information indicating a frequency-domain position of a control resource set 0 (CORESET#0) according to a sync raster defined for an SSB with an SCS being of 120 kHz or 480 kHz.

Reference may be made to the embodiment of the sixth aspect for explanations of the apparatus 2000 for transceiving a signal.

Embodiment of a ninth aspect

The embodiment of this disclosure provides an apparatus for transceiving a signal, applicable to a terminal equipment.

FIG. 21 is a schematic diagram of the apparatus for transceiving a signal of the embodiment of the ninth aspect. As shown in FIG. 21, an apparatus 2100 for transceiving a signal includes a second transceiving unit 2101, the second transceiving unit 2101 being configured to:

receive indication information indicating a frequency-domain position of a synchronization signal/PBCH block (SS/PBCH block, SSB), wherein in a case where a subcarrier spacing of the SSB is 960 kHz, the indication information does not indicate a frequency-domain position to which a sync raster with a predetermined global synchronization channel number (GSCN) corresponds.

Reference may be made to the embodiment of the second aspect for explanations of the apparatus 2100 for transceiving a signal.

FIG. 22 is another schematic diagram of the apparatus for transceiving a signal of the embodiment of the ninth aspect. As shown in FIG. 22, an apparatus 2200 for transceiving a signal includes a fifth transceiving unit 2201, the fifth transceiving unit 2201 being configured to:

receive a synchronization signal/PBCH block (SSB), wherein in a case where a subcarrier spacing of the SSB is 960 kHz, in a master information block (MIB) of the SSB, a cell selection-related field is set to be of a first predetermined value and/or a cell reselection-related field is set to be of a second predetermined value.

Reference may be made to the embodiment of the fourth aspect for explanations of the apparatus 2200 for transceiving a signal.

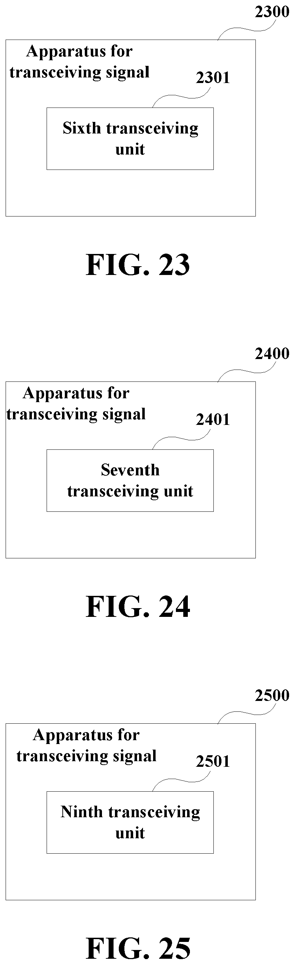

FIG. 23 is a further schematic diagram of the apparatus for transceiving a signal of the embodiment of the ninth aspect. As shown in FIG. 23, an apparatus 2300 for transceiving a signal includes a sixth transceiving unit 2301, the sixth transceiving unit 2301 being configured to:

receive a synchronization signal/PBCH block (SSB), an MIB of the SSB including information used to indicate information related to contents of SIB1 associated with the SSB; and receive SIB1 associated with the SSB.

Reference may be made to the embodiment of the fourth aspect for explanations of the apparatus 2300 for transceiving a signal.

FIG. 24 is still another schematic diagram of the apparatus for transceiving a signal of the embodiment of the ninth aspect. As shown in FIG. 24, an apparatus 2400 for transceiving a signal includes a seventh transceiving unit 2401, the seventh transceiving unit 2401 being configured to:

receive a synchronization signal/PBCH block (SSB) with a subcarrier spacing (SCS) being of 960 kHz; and determine a control resource set 0 (CORESET#0) according to a sync raster defined for the SSB with the SCS being of 120 kHz or 480 kHz.

Reference may be made to the embodiment of the fifth aspect for explanations of the apparatus 2300 for transceiving a signal.

FIG. 25 is yet another schematic diagram of the apparatus for transceiving a signal of the embodiment of the ninth aspect. As shown in FIG. 25, an apparatus 2500 for transceiving a signal includes a ninth transceiving unit 2501, the ninth transceiving unit 2501 being configured to:

receive an SSB and an SIB1 associated with the SSB; and
in a case where a subcarrier spacing of the SSB is 480 kHz or 960 kHz, and/or a subcarrier spacing of a PDCCH used to schedule a PDSCH carrying the SIB1 is 480 kHz or 960 kHz, for the SSB with one time index, monitor the PDCCH only in one slot, or monitor the PDCCH over more than two inconsecutive slots.

Reference may be made to the embodiment of the seventh aspect for explanations of the apparatus 2500 for transceiving a signal.

Embodiment of a tenth aspect

The embodiment of this disclosure provides a communication system, including a reduced capability UE and a network device.

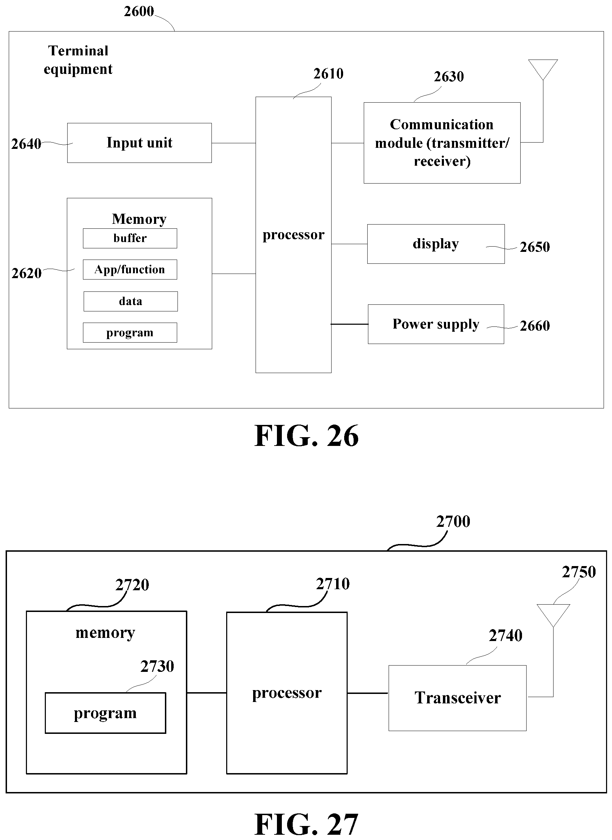

FIG. 26 is a schematic diagram of the terminal equipment of the embodiment of the tenth aspect. As shown in FIG. 26, a terminal equipment 2600 may include a processor 2610 and a memory 2620, the memory 2620 storing data and programs and being coupled to the processor 2610. It should be noted that this figure is illustrative only, and other types of structures may also be used, so as to supplement or replace this structure and achieve a telecommunications function or other functions.

For example, the processor 2610 may be configured to execute a program to carry out the methods as described in the embodiments of the second, fourth, fifth and seventh aspects.

As shown in FIG. 26, the terminal equipment 2600 may further include a communication module 2630, an input unit 2640, a display 2650, and a power supply 2660, wherein functions of the above components are similar to those in the related art, which shall not be described herein any further. It should be noted that the terminal equipment 2600 does not necessarily include all the parts shown in FIG. 26, and the above components are not necessary. Furthermore, the terminal equipment 2600 may include parts not shown in FIG. 26, and the related art may be referred to.

FIG. 27 is a schematic diagram of the network device of the embodiment of the tenth aspect. As shown in FIG. 27, a network device 2700 may include a processor 2710 (such as a central processing unit (CPU)) and a memory 2720, the memory 2720 being coupled to the processor 2710. The memory 2720 may store various data, and furthermore, it may store a program 2730 for information processing, and execute the program 2730 under control of the processor 2710.

For example, the processor 2710 may be configured to execute a program to carry out the method as described in the embodiments of the first, third and sixth aspects.

Furthermore, as shown in FIG. 27, the network device 2700 may include a transceiver 2740, and an antenna 2750, etc. Functions of the above components are similar to those in the related art, and shall not be described herein any further. It should be noted that the network device 2700 does not necessarily include all the parts shown in FIG. 27, and furthermore, the network device 2700 may include parts not shown in FIG. 27, and the related art may be referred to.

An embodiment of this disclosure provides a computer readable program, which, when executed in a terminal equipment, causes the terminal equipment to carry out the methods as described in the embodiments of the second, fourth, fifth and seventh aspects.

An embodiment of this disclosure provides a computer storage medium, including a computer readable program, which causes a terminal equipment to carry out the methods as described in the embodiments of the second, fourth, fifth and seventh aspects.

An embodiment of this disclosure provides a computer readable program, which, when executed in a network device, causes the network device to carry out the methods as described in the embodiments of the first, third and sixth aspects.

An embodiment of this disclosure provides a computer storage medium, including a computer readable program, which causes a network device to carry out the methods as described in the embodiments of the first, third and sixth aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

(First group of supplements)

1. A method for transceiving a signal, applicable to a network device, the method including:

transmitting indication information indicating a frequency-domain position of a synchronization signal/PBCH block (SS/PBCH block, SSB),
wherein in a case where a subcarrier spacing of the SSB is 960 kHz, the indication information does not indicate a frequency-domain position to which a sync raster with a predetermined global synchronization channel number (GSCN) corresponds.

2. The method according to supplement 1, wherein,
the indication information is included in RRC signaling.
3. The method according to supplement 1, wherein,
the sync raster with a predetermined global synchronization channel number (GSCN value) is a sync raster defined for an SSB(s) of 120 kHz and/or 480 kHz.
4. The method according to supplement 1, wherein,
the sync raster with a predetermined global synchronization channel number (GSCN value) is a sync raster defined for an SSB with an SCS being of 960 kHz.
5. The method according to supplement 1, wherein,
the SSB is transmitted in a frequency range of FR2-2.
6. The method according to supplement 1, wherein,
the sync raster is in the frequency range of FR2-2.
7. The method according to supplement 1, wherein the method further includes:

transmitting the synchronization signal/PBCH block (SS/PBCH block, SSB),

wherein in a case where the subcarrier spacing of the SSB is 960 kHz, in a master information block (MIB) of the SSB, a cell selection-related field is set to be of a first predetermined value and/or a cell reselection-related field is set to be of a second predetermined value.

8. The method according to supplement 7, wherein,

the cell selection-related field is a cellbar field,
a cell reselection-related field is an intra-frequency cell reselection (intraFreqReselection) field,
the first predetermined value is a value indicating barred,
and the second predetermined value is a value indicating allowed.

9. The method according to supplement 1, wherein the method further includes:

transmitting the synchronization signal/PBCH block (SS/PBCH block, SSB), the MIB of the SSB including information used to indicate information related to contents of SIB1 associated with the SSB; and
transmitting SIB1 associated with the SSB.

10. The method according to supplement 9, wherein,
in a case where the SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access.

(Second group of supplements)

1. A method for transceiving a signal, applicable to a terminal equipment, the method including:

receiving indication information indicating a frequency-domain position of the synchronization signal/PBCH block (SS/PBCH block, SSB),
wherein in a case where a subcarrier spacing of the SSB is 960 kHz, the indication information does not indicate a frequency-domain position to which a sync raster with a predetermined global synchronization channel number (GSCN) corresponds.

2. The method according to supplement 1, wherein,
the indication information is included in RRC signaling.
3. The method according to supplement 1, wherein,
the sync raster with a predetermined global synchronization channel number (GSCN value) is a sync raster defined for an SSB(s) of 120 kHz and/or 480 kHz.
4. The method according to supplement 1, wherein,
the sync raster with a predetermined global synchronization channel number (GSCN value) is a sync raster defined for an SSB with an SCS being of 960 kHz.
5. The method according to supplement 1, wherein,
the SSB is transmitted in a frequency range of FR2-2.
6. The method according to supplement 1, wherein,
the sync raster is in the frequency range of FR2-2.
7. The method according to supplement 1, wherein the method further includes:

receiving the synchronization signal/PBCH block (SS/PBCH block, SSB),
wherein in a case where the subcarrier spacing of the SSB is 960 kHz, in a master information block (MIB) of the SSB, a cell selection-related field is set to be of a first predetermined value and/or a cell reselection-related field is set to be of a second predetermined value.

8. The method according to supplement 7, wherein,

the cell selection-related field is a cellbar field,
a cell reselection-related field is an intra-frequency cell reselection (intraFreqReselection) field,

the first predetermined value is a value indicating barred,
and the second predetermined value is a value indicating allowed.

9. The method according to supplement 1, wherein the method further includes:

receiving the synchronization signal/PBCH block (SS/PBCH block, SSB), the MIB of the SSB including information used to indicate information related to contents of SIB1 associated with the SSB; and
receiving SIB1 associated with the SSB.

10. The method according to supplement 9, wherein,
in a case where the SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access.

(Third group of supplements)

1. A method for transceiving a signal, applicable to a terminal equipment, the method including:

receiving a synchronization signal/PBCH block (SS/PBCH block, SSB) with a subcarrier spacing (SCS) being of 960 kHz; and
determining a control resource set 0 (CORESET#0) according to a sync raster defined for the SSB with the SCS being of 120 kHz or 480 kHz.

2. The method according to supplement 1, wherein the method further includes:
receiving a PDCCH used to schedule a PDSCH carrying SIB1 according to the determined CORESET#0.
3. The method according to supplement 1, wherein,
the SSB is received in a frequency range of FR2-2.
4. The method according to supplement 1, wherein,
the sync raster is in the frequency range of FR2-2.

(Fourth group of supplements)

1a. A method for transceiving a signal, applicable to a network device, the method including:

transmitting a synchronization signal/PBCH block (SS/PBCH block, SSB) with a subcarrier spacing (SCS) being of 960 kHz; and
transmitting indication information, the indication information indicating a frequency-domain position of a control resource set 0 (CORESET#0) according to a synchronization raster defined for the SSB with the SCS being of 120 kHz or 480 kHz.

2a. The method according to supplement 1a, wherein,
the SSB is transmitted in a frequency range of FR2-2.

(Fifth group of supplements)

1. A method for transceiving a signal, applicable to a terminal equipment, the method including:

receiving an SSB and SIB1 associated with the SSB; and
in a case where the subcarrier spacing of the SSB is 480 kHz or 960 kHz, and/or a subcarrier spacing of a PDCCH used to schedule a PDSCH carrying the SIB1 is 480 kHz or 960 kHz,
for the SSB with one time index, monitoring the PDCCH only in one slot, or monitoring the PDCCH over more than two inconsecutive slots.

2. The method according to supplement 1, wherein,
the two or more inconsecutive slots are predefined or are indicated by the SSB.
3. The method according to supplement 1, wherein,
in the more than two inconsecutive slots, the number of slots spaced between the slots is predefined or is indicated by the SSB.
4. The method according to supplement 1, wherein,

the SSB is received in a frequency range of FR2-2.
1a. A method for transceiving a signal, applicable to a terminal equipment, the method including:

receiving an SSB and SIB1 associated with the SSB; and
in a case where the subcarrier spacing of the SSB is 480 kHz or 960 kHz, and/or a subcarrier spacing of a PDCCH used to schedule a PDSCH carrying the SIB1 is 480 kHz or 960 kHz,
determining a slot for monitoring the PDCCH according to a reference SCS (such as 120 kHz), the reference SCS being different from an SCS of the PDCCH used to schedule a PDSCH carrying the SIB1.

**Claims**

1. An apparatus for transceiving a signal, applicable to a network device, the apparatus comprising a first transceiving unit, the first transceiving unit being configured to:
   transmit a synchronization signal/PBCH block (SS/PBCH block, SSB).

2. The apparatus according to claim 1, wherein the first transceiving unit is further configured to:

   transmit indication information indicating a frequency-domain position of the synchronization signal/PBCH block, wherein in a case where a subcarrier spacing of the SSB is 960 kHz, the indication information does not indicate a frequency-domain position to which a sync raster with a predetermined global synchronization channel number (GSCN) corresponds; or
   transmit first indication information, when a subcarrier spacing (SCS) being of the SSB is 960 kHz, the first indication information indicating a frequency-domain position of a control resource set 0 (CORESET#0) according to a synchronization raster defined for the SSB with the SCS being of 120 kHz or 480 kHz.

3. The apparatus according to claim 2, wherein,
   the indication information is included in RRC signaling.

4. The apparatus according to claim 2, wherein,

   the sync raster with a predetermined global synchronization channel number (GSCN value) is a sync raster defined for an SSB(s) of 120 kHz and/or 480 kHz; or
   the sync raster with a predetermined global synchronization channel number (GSCN value) is a sync raster defined for an SSB with an SCS being of 960 kHz.

5. The apparatus according to claim 2, wherein,

   the SSB is transmitted in a frequency range of FR2-2; and/or
   the sync raster is in the frequency range of FR2-2.

6. The apparatus according to claim 1, wherein,
   in a case where the subcarrier spacing of the SSB is 960 kHz, in a master information block (MIB) of the SSB, a cell selection-related field is set to be of a first predetermined value and/or a cell reselection-related field is set to be of a second predetermined value.

7. The apparatus according to claim 6, wherein,

   the cell selection-related field is a cellbar field,

a cell reselection-related field is an intra-frequency cell reselection (intraFreqReselection) field,
the first predetermined value is a value indicating barred,
and the second predetermined value is a value indicating allowed.

8. The apparatus according to claim 1, wherein,

an MIB of the SSB includes information used to indicate information related to contents of SIB1 associated with the SSB,
and the first transceiving unit is further configured to:
transmit a system information block 1 (SIB1) associated with the SSB.

9. The apparatus according to claim 8, wherein,
in a case where an SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access.

10. An apparatus for transceiving a signal, applicable to a terminal equipment, the apparatus comprising a second transceiving unit, the second transceiving unit being configured to:
receive a synchronization signal/PBCH block (SS/PBCH block, SSB).

11. The apparatus according to claim 10, wherein the second transceiving unit is further configured to:

receive indication information indicating a frequency-domain position of the synchronization signal/PBCH block,
wherein in a case where a subcarrier spacing of the SSB is 960 kHz, the indication information does not indicate a frequency-domain position to which a sync raster with a predetermined global synchronization channel number (GSCN) corresponds; or
determining a control resource set 0 (CORESET#0) according to a sync raster defined for the SSB with the SCS being of 120 kHz or 480 kHz.

12. The apparatus according to claim 11, wherein,
the indication information is included in RRC signaling.

13. The apparatus according to claim 11, wherein,

the sync raster with a predetermined global synchronization channel number (GSCN value) is a sync raster defined for an SSB(s) of 120 kHz and/or 480 kHz; or
the sync raster with a predetermined global synchronization channel number (GSCN value) is a sync raster defined for an SSB with an SCS being of 960 kHz.

14. The apparatus according to claim 11, wherein,

the SSB is transmitted in a frequency range of FR2-2; and/or
the sync raster is in the frequency range of FR2-2.

15. The apparatus according to claim 10, wherein,
in a case where the subcarrier spacing of the SSB is 960 kHz, in a master information block (MIB) of the SSB, a cell selection-related field is set to be of a first predetermined value and/or a cell reselection-related field is set to be of a second predetermined value.

16. The apparatus according to claim 15, wherein,

the cell selection-related field is a cellbar field,
a cell reselection-related field is an intra-frequency cell reselection (intraFreqReselection) field,
the first predetermined value is a value indicating barred,
and the second predetermined value is a value indicating allowed.

17. The apparatus according to claim 1, wherein,

an MIB of the SSB includes information used to indicate information related to contents of SIB1 associated with the SSB,
and the second transceiving unit is further configured to:

receive a SIB1 associated with the SSB.

18. The apparatus according to claim 17, wherein,
in a case where the SCS of the SSB is 960 kHz, the information used to indicate information related to the contents of the SIB1 associated with the SSB indicates that the SIB1 is only used for automatic neighbor relationship report or cell global identifier report (ANR/CGI report), or that the SIB1 does not include information for supporting initial access.

19. The apparatus according to claim 10, wherein the second transceiving unit is further configured to:

receive a SIB1 associated with the SSB; and
in a case where the subcarrier spacing of the SSB is 480 kHz or 960 kHz, and/or a subcarrier spacing of a PDCCH used to schedule a PDSCH carrying the SIB1 is 480 kHz or 960 kHz,
for the SSB with one time index, monitor the PDCCH only in one slot, or monitor the PDCCH over two or more inconsecutive slots, wherein a subcarrier spacing (SCS) to which the one slot or the two or more slots correspond(s) is a subcarrier spacing (SCS) being of the PDCCH.

20. The apparatus according to claim 19, wherein,

the two or more inconsecutive slots are predefined or are indicated by the SSB; and/or
in the two or more inconsecutive slots, the number of slots spaced between the slots is predefined or is indicated by the SSB.

## FIG. 1

Synchronization raster

**RBs to which the SSB corresponds**

| 0 | 1 | 2 | 3 | 4 | 5 | 6 | 7 | 8 | 9 | 10 | 11 | 12 | 13 | 14 | 15 | 16 | 17 | 18 | 19 |

**a subcarrier to which an RB corresponds**

0 1 2 3 4 5 6 7 8 9 10 11

## FIG. 2

301

┌─────────────────────────────────────────────────┐
│                                                   │
│   an SSB is detected and received on the sync raster  │
│                                                   │
└─────────────────────────────────────────────────┘

302

┌─────────────────────────────────────────────────┐
│   it is determined whether a cellBar field of the SSB is │
│   barred, and it is further determined whether an │
│   intraFrequencySelection field is not allowed    │
└─────────────────────────────────────────────────┘

303

┌─────────────────────────────────────────────────┐
│                                                   │
│   it is determined if the SSB is associated with SIB1 │
│                                                   │
└─────────────────────────────────────────────────┘

304

┌─────────────────────────────────────────────────┐
│                                                   │
│   the CORESET for Type0-PDCCH CSS is determined   │
│                                                   │
└─────────────────────────────────────────────────┘

305

┌─────────────────────────────────────────────────┐
│   in Type0-PDCCH CSS, a PDCCH for scheduling a    │
│   PDSCH used for carrying SIB1 is monitored and received │
└─────────────────────────────────────────────────┘

306

┌─────────────────────────────────────────────────┐
│   the PDSCH, scheduled by the PDCCH, used for carrying │
│   SIB1 is received, so as to obtain the SIB1      │
└─────────────────────────────────────────────────┘

**FIG. 3**

**Cell A**
Phy-CID=3
Global-CID=17

**UE**

**Cell B**
Phy-CID=5
Global-CID=19

*1. Report*
(Phy-CID=5, strong signal)

*2. Report Global-CID Request*
(Target Phy-CID=5)

*2b. BCCH (...)*

*3. Report Global-CID=19*

# FIG. 4

501

the SSB is detected and received according to a physical cell identification indicated by a base station at a frequency-domain position indicated by the base station

502

it is determined if the SSB received in operation 301 has associated SIB1

503

the CORESET for Type0-PDCCH CSS is determined

504

in Type0-PDCCH CSS, the PDCCH for scheduling the PDSCH used for carrying SIB1 is monitored and received

505

receiving the PDSCH, scheduled by the PDCCH, used for carrying SIB1 is received, so as to obtain the SIB1

## FIG. 5

601

indication information indicating a frequency-domain position of the synchronization signal/PBCH block (SS/PBCH block, SSB) is transmitted

602

the SSB is transmitted, wherein in a case where the subcarrier spacing of the SSB is 960 kHz, the frequency-domain position of the SSB is different from the frequency-domain position of the sync raster with a predetermined global synchronization channel number value

**FIG. 6**

701

indication information indicating a frequency-domain position of a synchronization signal/PBCH block (SS/PBCH block, SSB) is received

**FIG. 7**

801

a synchronization signal/PBCH block (SSB) is transmitted

**FIG. 8**

901

the synchronization signal/PBCH block (SSB) is transmitted, the MIB of the SSB including information used to indicate information related to contents of SIB1 associated with the SSB

902

an SIB1 associated with the SSB is transmitted

# FIG. 9

1001

a synchronization signal/PBCH block (SSB) is received

# FIG. 10

1101

the synchronization signal/PBCH block (SSB) is received, the MIB of the SSB including information used to indicate information related to contents of SIB1 associated with the SSB

1102

an SIB1 associated with the SSB is received

# FIG. 11

1201

a synchronization signal/PBCH block (SSB) with a
subcarrier spacing (SCS) being of 960 kHz is received

1202

a control resource set 0 (CORESET#0) is determined
according to a sync raster defined for the SSB with the SCS
being of 120 kHz or 480 kHz

1203

a PDCCH used to schedule a PDSCH carrying SIB1 is
received according to the determined CORESET#0

FIG. 12

1301

a synchronization signal/PBCH block (SSB) with a
subcarrier spacing (SCS) being of 960 kHz is transmitted

1302

indication information is transmitted, the indication
information indicating a frequency-domain position of a
control resource set 0 (CORESET#0) according to a
synchronization raster defined for the SSB with the SCS
being of 120 kHz or 480 kHz

FIG. 13

1401

an SSB and an SIB1 associated with the SSB are received

1402

in a case where the subcarrier spacing of the SSB is 480 kHz or 960 kHz, and/or a subcarrier spacing of a PDCCH used to schedule a PDSCH carrying the SIB1 is 480 kHz or 960 kHz, for the SSB with one time index, the PDCCH is not monitored in two continuous slots

# FIG. 14

EP 4 383 874 A1

| ←————SSB period————→ | | | | ←————SSB period————→ | | | | |
|---|---|---|---|---|---|---|---|---|---|
| ... | SSB (index=x) | SSB (index=x+1) | ... | ... | ... | SSB (index=x) | SSB (index=x+1) | ... | ... |

←————————————————PDCCH monitoring frame————————————————→

←————————Offset 0 (ms)————————→ ←———Floor (max, index, M) (slot)———→

| Subframe 0 | Subframe 1 | Subframe 2 | Subframe 3 | Subframe 4 | Subframe 5 | Subframe 6 | Subframe 7 | Subframe 8 | Subframe 9 |
|---|---|---|---|---|---|---|---|---|---|

| | | | | | | | | | | | | | | | |
|---|---|---|---|---|---|---|---|---|---|---|---|---|---|---|---|
| $M=1/2$ | 0 | 1 | 2 | 3 | 4 | 5 | 6 | 7 | ... | ... | ... | ... | ... |
| $M=1$ | 0 | | 1 | | 2 | | 3 | | ... | ... | ... | ... | ... |
| $M=2$ | 0 | | | | 1 | | | | ... | ... | ... | ... | ... |

| Slot 0 | Slot 1 | Slot 2 | Slot 3 | Slot 4 | Slot 5 | Slot 6 | Slot 7 |
|---|---|---|---|---|---|---|---|

| x |

PDCCH monitoring occasion of the SSB corresponding to index = x

| x & y |

PDCCH monitoring occasions of the SSB corresponding to index = x and the SSB corresponding to index = y

**FIG. 15**

## FIG. 16

PDCCH monitoring occasion of the SSB corresponding to index = x

PDCCH monitoring occasions of the SSB corresponding to index = x and the SSB corresponding to index = y

SSB period

SSB (index=x) | SSB (index=x+1)

SSB period

SSB (index=x) | SSB (index=x+1)

PDCCH monitoring frame

Offset 0 (ms)

Floor (max. index, M) (slot)

Subframe 0 | Subframe 1 | Subframe 2 | Subframe 3 | Subframe 4 | Subframe 5 | Subframe 6 | Subframe 7 | Subframe 8 | Subframe 9

Slot 0 | Slot 1 | Slot 2 | Slot 3 | Slot 4 | Slot 5 | Slot 6 | Slot 7

M=1/2
M=1
M=2

1700

Apparatus for
transceiving signal      1701

First transceiving
unit

**FIG. 17**

1800

Apparatus for
transceiving signal      1801

Third transceiving
unit

**FIG. 18**

1900

Apparatus for
transceiving signal      1901

Fourth transceiving
unit

**FIG. 19**

2000

Apparatus for
transceiving signal 2001

Eighth transceiving
unit

**FIG. 20**

2100

Apparatus for
transceiving signal 2101

Second transceiving
unit

**FIG. 21**

2200

Apparatus for
transceiving signal 2201

Fifth transceiving
unit

**FIG. 22**

2300

Apparatus for
transceiving signal          2301

Sixth transceiving
unit

## FIG. 23

2400

Apparatus for
transceiving signal          2401

Seventh
transceiving unit

## FIG. 24

2500

Apparatus for
transceiving signal          2501

Ninth transceiving
unit

## FIG. 25

2600

Terminal
equipment

2610

2630

2640 — Input unit

Communication
module (transmitter/
receiver)

2620 —

Memory
buffer
App/function
data
program

processor

display — 2650

Power supply — 2660

**FIG. 26**

2700

2720

2710

2750

2740

memory

2730

program

processor

Transceiver

**FIG. 27**

SSB period

| ... | SSB (index=x) | SSB (index=x+1) | ... | ... | ... | SSB (index=x) | SSB (index=x+1) | ... | ... |

SSB period

PDCCH monitoring frame

Offset 0 (ms)

Floor (max. index, M) (slot)

| Subframe 0 | Subframe 1 | Subframe 2 | Subframe 3 | Subframe 4 | Subframe 5 | Subframe 6 | Subframe 7 | Subframe 8 | Subframe 9 |

120kHz
(8 slots per SF)

M=1/2  0 | 1 | 0 & 2 | 1 & 3 | 2 & 4 | 3 & 5 | 4 & 6 | 5 & 7 | ... | ... | ... | ...

M=1  0 | 0 & 1 | 1 & 2 | 2 & 3 | ... | ... | ... | ...

M=2  0 | 0 | 1 | 1 | ... | ... | ... | ...

Slot 0 | Slot 1 | Slot 2 | Slot 3 | Slot 4 | Slot 5 | Slot 6 | Slot 7

PDCCH monitoring occasion of the SSB corresponding to index = x

| x |

PDCCH monitoring occasions of the SSB corresponding to index = x and the SSB corresponding to index = y

| x & y |

480kHz
(32 slots per SF)

M=1/2  0 | 1 | 0 & 2 | 1 & 3 | ...

M=1  0 | 0 & 1 | ...

M=2  0 | 0 | ...

Slot 0 | Slot 1 | Slot 2 | Slot 3 | Slot 4 | Slot 5 | Slot 6 | Slot 7

**FIG. 28**

<div align="center">

**INTERNATIONAL SEARCH REPORT**

</div>

| International application No. |
| --- |
| **PCT/CN2021/110690** |

| A. | CLASSIFICATION OF SUBJECT MATTER |
| --- | --- |
| | H04W 72/04(2009.01)i |

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; WPABS; ENTXT; 3GPP; DWPI; VEN: 小区选择, 频域位置, 频率, 小区重选, 同步光栅, 同步信号块, 子载波间隔, 允许, 禁止, 初始接入, 指示, SSB, SIB, MIB, FR2, SS/PBCH, frequency, forbidden, allowed, coreset, indicat+, 960KHZ, raster, sync, reselection, GSCN, synchronization, location

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2019306832 A1 (SAMSUNG ELECTRONICS CO., LTD.) 03 October 2019 (2019-10-03) pp. 3-41 | 1, 8, 10, 17 |
| X | WO 2020087543 A1 (FUJITSU LIMITED et al.) 07 May 2020 (2020-05-07) description, pp. 1-22 | 1, 8, 10, 17 |
| A | FUJITSU. "R1-1910128 "Considerations on RMSI and PRACH in NR-U"" *3GPP tsg_ran\wg1_rl1*, 07 October 2019 (2019-10-07), entire document | 1-20 |
| A | SPREADTRUM COMMUNICATIONS. ""R1-2102448 Discussion on initial access aspects for NR for 60GHz"" *3GPP tsg_ran\wg1_rl1*, Vol. , No. , 07 April 2021 (2021-04-07), ISSN: , entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2022** | **24 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/110690**

| Patent document cited in search report | | | Publication date (day/month/year) | Patent family member(s) | | | Publication date (day/month/year) |
|---|---|---|---|---|---|---|---|
| US | 2019306832 | A1 | 03 October 2019 | KR | 20200128075 | A | 11 November 2020 |
| | | | | WO | 2019190251 | A1 | 03 October 2019 |
| | | | | CN | 111919411 | A | 10 November 2020 |
| | | | | EP | 3732812 | A1 | 04 November 2020 |
| WO | 2020087543 | A1 | 07 May 2020 | EP | 3876622 | A1 | 08 September 2021 |
| | | | | JP | 2022505980 | A | 14 January 2022 |
| | | | | KR | 20210064350 | A | 02 June 2021 |
| | | | | US | 2021250921 | A1 | 12 August 2021 |

Form PCT/ISA/210 (patent family annex) (January 2015)